# EUROPEAN PATENT SPECIFICATION

(11) **EP 3 699 426 B1**
(45) Date of publication and mention of the grant of the patent: **22.09.2021**
(21) Application number: 20158111.3
(22) Date of filing: 19.02.2020
(51) Int. Cl.: F04B 35/04, F25B 31/02, F25B 9/14, H02K 1/28, H02K 1/34, H02K 7/14, H02K 33/16, H02K 41/03

(54) **LINEAR COMPRESSOR FOR CRYOCOOLER**
LINEARVERDICHTER FÜR EINEN KRYOKÜHLER
COMPRESSEUR LINÉAIRE POUR CRYORÉFRIGÉRATEUR

(30) Priority: 20.02.2019 JP 2019028482
(43) Date of publication of application: 26.08.2020
(73) Proprietor: Sumitomo Heavy Industries, Ltd., Tokyo 141-6025 (JP)
(72) Inventor: YUMOTO, Kenta, Kanagawa, 237-8555, (JP); HIRATSUKA, Yoshikatsu, Kanagawa, 237-8555, (JP)
(74) Representative: Louis Pöhlau Lohrentz

(56) References cited:
- EP-A1- 3 346 584
- EP-A2- 0 979 943
- WO-A1-02/093719
- JP-A- 2000 116 100
- JP-A- 2002 034 225
- JP-A- 2009 222 312
- US-A1- 2003 080 634
- US-A1- 2019 048 863

## Description

### BACKGROUND OF THE INVENTION

### Field of the Invention

A certain embodiment of the present invention relates to a linear compressor for a cryocooler.

### Description of Related Art

In a cryocooler such as a pulse tube cryocooler, a Sterling cryocooler, and a Gifford-McMahon (GM) cryocooler, and a linear compressor is used as a refrigerant gas source in some cases. Such a linear compressor for a cryocooler is typically driven by an electromagnetic linear actuator. European Patent Publication No. 3 346 584 discloses a movable core-type reciprocating motor and a reciprocating compressor using the movable core-type reciprocating motor.

### SUMMARY OF THE INVENTION

As simple means that fixes a component such as a magnet in a linear actuator, an adhesive is often used (for example, Japanese Unexamined Patent Publication No. 2009-222312). However, the use of the adhesive also has a disadvantage. For example, an outgas that derives from the adhesive can decrease a cooling capacity by gradually mixing into a refrigerant gas while a cryocooler is being operated for a long period of time, and contaminating the inside of a cold head.

In particular, for example, in a case where the cryocooler is mounted on a spacecraft such as an artificial satellite, it is practically difficult or impossible to remove the contamination which is once generated in the cryocooler during the operation of the spacecraft, and a decrease in the cooling capacity caused by the contamination can become a serious risk to maintaining stable operation of a device to be cooled. Such inconvenience caused by the use of the adhesive can occur not only in the cryocooler for a spacecraft but also in a cryocooler for other applications in which stable operation is desired to be continued for a long period of time.

An exemplary object of one embodiment of the present invention is to provide a technique of suppressing a decrease in a cooling capacity of a cryocooler.

According to an aspect of the present invention, there is provided a linear compressor for a cryocooler including a piston that extends in an axial direction, a linear actuator that drives the piston in the axial direction, a housing that accommodates the piston and the linear actuator and supports the piston to be oscillatable in the axial direction. The linear actuator includes an outer yoke that is fixed to the housing, an inner yoke that is disposed on a radially inner side of the outer yoke and is fixed to the housing, a magnet holder that includes a magnet receiving recessed part positioned between the inner yoke and the outer yoke in a radial direction and is fixed to the piston, and a permanent magnet that is housed in the magnet receiving recessed part and is fixed to the magnet holder without using an adhesive; and the magnet holder includes a pressing mechanism that presses the permanent magnet against the magnet receiving recessed part.

Any combination of the components described above and any replacement of the components and expressions of the present invention between methods, devices, and systems are also effective as embodiments of the present invention.

In the present invention, a decrease in the cooling capacity of the cryocooler can be suppressed.

### BRIEF DESCRIPTION OF THE DRAWINGS

Fig. 1 schematically illustrates a cryocooler according to an embodiment.
Fig. 2 schematically illustrates an example of a magnet fixing structure in a linear compressor of the cryocooler not covered by the claimed invention.
Fig. 3 schematically illustrates another example of the magnet fixing structure in the linear compressor of the cryocooler according to an embodiment of the invention.
Fig. 4 schematically illustrates still another example of the magnet fixing structure in the linear compressor of the cryocooler according to another embodiment of the invention.
Fig. 5 schematically illustrates still another example of the magnet fixing structure in the linear compressor of the cryocooler not covered by the claimed invention.
Fig. 6 schematically illustrates still another example of the magnet fixing structure in the linear compressor of the cryocooler not covered by the claimed invention.

### DETAILED DESCRIPTION OF THE INVENTION

Hereinafter, an embodiment for executing the present invention will be described in detail with reference to the drawings. In the description and drawings, the same or equivalent components, members, and processes will be assigned with the same reference symbols, and overlapping description thereof will be omitted as appropriate. The scales and shapes of the illustrated parts are set for convenience in order to make the description easy to understand, and are not to be understood as limiting unless stated otherwise. The embodiment is merely an example and does not limit the scope of the present invention. All characteristics and combinations to be described in the embodiment are not necessarily essential to the invention.

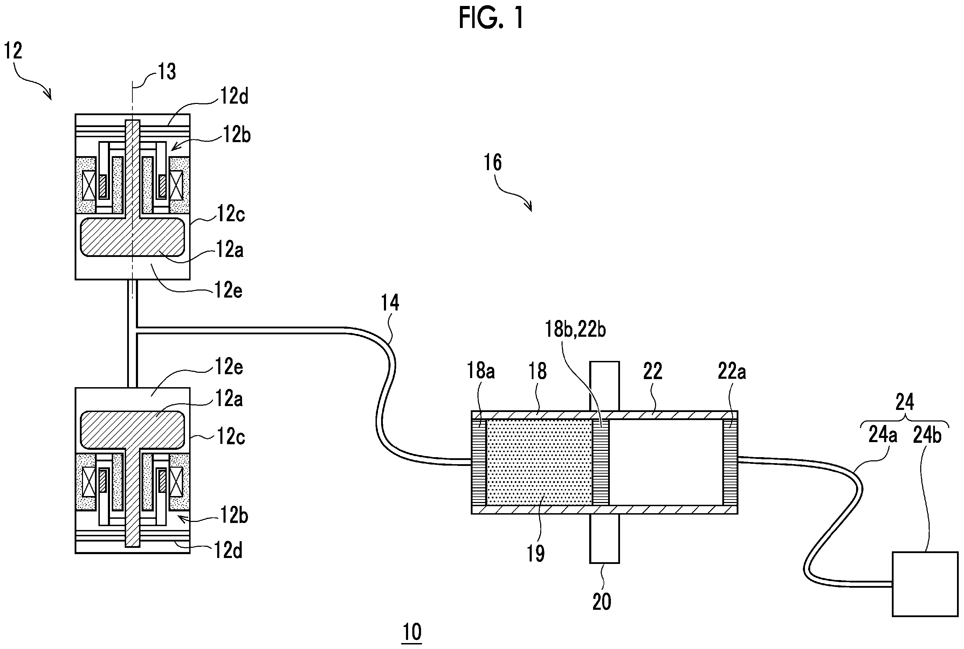

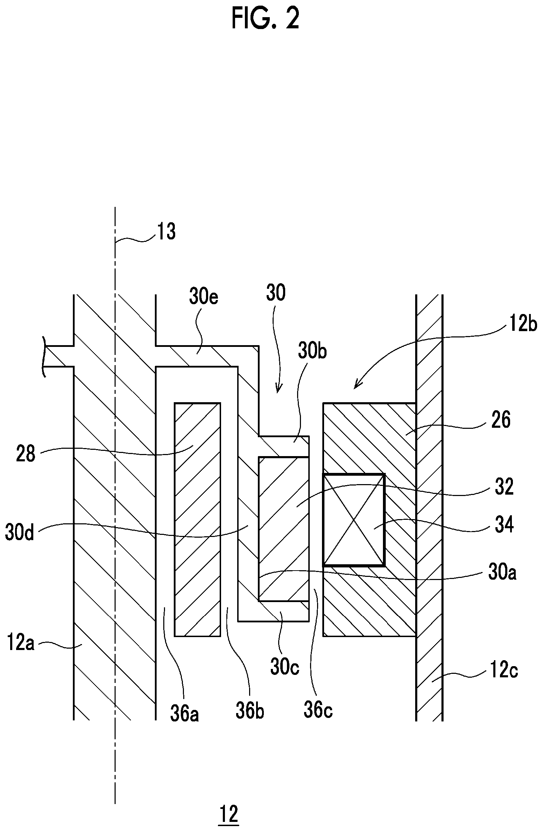

Fig. 1 schematically illustrates a cryocooler according to the embodiment. Fig. 2 schematically illustrates an example of a magnet fixing structure in a linear compressor of the cryocooler not covered by the claimed invention.

A cryocooler 10 is configured as a Stirling-type pulse tube cryocooler, and includes a linear compressor 12, a connecting pipe 14, and an expander 16 which is also referred to as a cold head. The expander 16 includes a regenerator 18, a cooling stage 20, a pulse tube 22, and a phase control unit 24. The expander 16 has a so-called in-line or linear configuration in which the regenerator 18 and the pulse tube 22 are coaxially connected to each other in series.

Although the cryocooler 10 is illustrated as a single-stage pulse tube cryocooler in Fig. 1 for simplicity, it is also possible to configure the cryocooler 10 as a two-stage pulse tube cryocooler in one embodiment.

A helium gas is typically used as a refrigerant gas (also called a working gas) of the cryocooler 10. Without being limited thereto, however, it is also possible to use another appropriate gas as the refrigerant gas. The cryocooler 10 is filled with the refrigerant gas and is sealed.

The cryocooler 10 is designed such that pressure oscillation of the refrigerant gas is induced in the pulse tube 22 by an operation of the linear compressor 12 and displacement oscillation of the refrigerant gas, that is, the reciprocation of a gas piston, occurs in the pulse tube 22 with an appropriate phase delay synchronized with the pressure oscillation by the workings of the phase control unit 24. The movement of the refrigerant gas, which is periodically reciprocating up and down in the pulse tube 22 while maintaining a certain pressure, is frequently referred to as a "gas piston", and the term is often used to describe the behavior of the pulse tube cryocooler. When the gas piston is at or near a high-temperature end of the pulse tube 22, the refrigerant gas expands at a low-temperature end of the pulse tube 22, causing a chill.

By repeating such a refrigeration cycle (for example, specifically, a reverse Stirling cycle), the cryocooler 10 can cool the cooling stage 20 to a desired cryogenic temperature. Therefore, the cryocooler 10 can cool an object to be cooled, which is provided on the cooling stage 20 or is thermally coupled to the cooling stage 20, to a cryogenic temperature via an appropriate heat transfer member.

For example, the object to be cooled may be a detection element that detects infrared rays, submillimeter waves, X-rays, or other electromagnetic waves. Such a detection element may be a component of an observation device used in astronomical observation. The cryocooler 10 may be set to be mountable on a spacecraft, for example, an artificial satellite, together with the observation device including such an electromagnetic wave detecting element. Alternatively, the cryocooler 10 may be mounted on ground facilities including such an observation device. Alternatively, the cryocooler 10 may be mounted on a spacecraft or ground facilities together with, for example, a superconducting device or other devices where a cryogenic temperature environment is desired.

The linear compressor 12 is configured as a so-called facing two-cylinder type linear compressor including two compressor units that are disposed coaxially to face each other. Each of the compressor units includes a piston 12a that extends in an axial direction, a linear actuator 12b that drives the piston 12a in the axial direction, and a housing 12c that accommodates the piston 12a and the linear actuator 12b and supports the piston 12a to be oscillatable in the axial direction. In Fig. 1, the axial direction corresponds to an up-and-down direction. For convenience of description, a center axis 13 of the piston 12a is illustrated in Figs. 1 and 2.

The piston 12a is elastically supported by the housing 12c via a leaf spring or an elastic support member, which is also called a flexure bearing 12d such that displacement in the axial direction can be caused while displacement in a radial direction and a circumferential direction is restricted. In addition, the housing 12c supports the linear actuator 12b in a fixed manner. A compression chamber 12e is formed between the housing 12c and the piston 12a. One end of the connecting pipe 14 is connected to the compression chamber 12e.

The piston 12a oscillates in the axial direction by the driving of the linear actuator 12b. Accordingly, the volume of the compression chamber 12e increases and decreases due to oscillation, and pressure oscillation of the refrigerant gas in the compression chamber 12e is generated. For example, an average pressure of pressure oscillation may be, for example, in a range of approximately 1 to 3 MPa in order of megapascals, a pressure amplitude may be, for example, in a range of approximately 0.5 to 1 MPa, and frequency may be, for example, in a range of approximately 50 to 60 Hz.

The connecting pipe 14 connects the linear compressor 12 to the expander 16. That is, the linear compressor 12 and the expander 16 are connected to each other via the connecting pipe 14 such that the refrigerant gas can flow bidirectionally between the linear compressor 12 and the expander 16. Therefore, the pressure oscillation of the refrigerant gas generated by the linear compressor 12 is transmitted to the expander 16 via the connecting pipe 14. Accordingly, pressure oscillation can be induced in the expander 16. The connecting pipe 14 may be a flexible pipe or a stiff pipe.

The regenerator 18 includes a regenerator high-temperature end 18a and a regenerator low-temperature end 18b, and extends from the regenerator high-temperature end 18a to the regenerator low-temperature end 18b in an axial direction (right-and-left direction in Fig. 1). The regenerator high-temperature end 18a is connected to the other end of the connecting pipe 14, and is connected to the compression chamber 12e of the linear compressor 12 via the connecting pipe 14. The regenerator high-temperature end 18a may be provided with a heat exchanger or another heat dissipation member, which is also called an aftercooler.

The regenerator 18 is filled with a regenerator material 19. The regenerator material 19 is, for example, a plurality of meshes (for example, a high heat conductive metal material including copper, or other metal meshes) or a laminate of mesh members. Alternatively, the regenerator material 19 may be a sintered body or a porous body. The regenerator material 19 may be a granular regenerator material. For example, the regenerator 18 has a cylindrical shape. Alternatively, the regenerator 18 may have a donut shape or other tubular shapes.

The pulse tube 22 is, for example, a tubular member having a cylindrical shape or other appropriate shapes, and has an internal space that allows the refrigerant gas to be accommodated. The regenerator 18 and the phase control unit 24 are fluidly connected to each other via the pulse tube 22. The cryocooler 10 illustrated in Fig. 1 is not provided with a flow path of the refrigerant gas that circumvents the regenerator 18 and the pulse tube 22. Thus, all gas flows between the linear compressor 12 and the phase control unit 24 pass through the regenerator 18 and the pulse tube 22.

The pulse tube 22 includes a pulse tube high-temperature end 22a and a pulse tube low-temperature end 22b. The pulse tube low-temperature end 22b is connected to the regenerator low-temperature end 18b. The pulse tube low-temperature end 22b and the regenerator low-temperature end 18b communicate with each other. Accordingly, the pulse tube 22 and the regenerator 18 are fluidly connected to each other. In addition, the pulse tube low-temperature end 22b is firmly coupled to the regenerator low-temperature end 18b in terms of structure.

The cooling stage 20 is provided at a coupled part between the pulse tube low-temperature end 22b and the regenerator low-temperature end 18b such that the coupled part is surrounded. The cooling stage 20 is formed of, for example, a high heat conductive metal material including copper. The cooling stage 20 is thermally coupled to the pulse tube low-temperature end 22b and the regenerator low-temperature end 18b. As described above, a desired object to be cooled by the cryocooler 10 can be provided on the cooling stage 20.

The phase control unit 24 is provided at the pulse tube high-temperature end 22a. The phase control unit 24 includes an inertance pipe 24a connected to the pulse tube high-temperature end 22a and a buffer tank 24b fluidly connected to the pulse tube high-temperature end 22a via the inertance pipe 24a. The inertance pipe 24a may be a flexible pipe or a stiff pipe. Since the inertance pipe 24a is significantly long (for example, can be at least approximately 1 m or several meters) compared to an axial length of the regenerator 18 and/or the pulse tube 22, the inertance pipe may be molded into a coil shape, a meandering shape, or other curved shape.

Fig. 2 illustrates a part of a section of the piston 12a, the linear actuator 12b, and the housing 12c taken along a plane including the center axis 13 of the piston 12a. Since the piston 12a and the linear actuator 12b are configured to be axially symmetric with respect to the center axis 13 of the piston 12a, for convenience, Fig. 2 illustrates only one side of the linear actuator 12b with respect to the piston 12a and the illustration of an opposite side having the same configuration is omitted.

As illustrated in Fig. 2, the linear actuator 12b includes an outer yoke 26, an inner yoke 28, a magnet holder 30, a permanent magnet 32, and a coil 34. The components of the linear actuator 12b are coaxially disposed with the piston 12a to surround the piston 12a. The piston 12a is positioned on the center axis 13. The inner yoke 28, the magnet holder 30, the permanent magnet 32, the coil 34, and the outer yoke 26 are disposed radially outward from the center axis in this order.

The linear actuator 12b is a magnet movable linear oscillation actuator. A stationary part of the linear actuator 12b is configured by the outer yoke 26, the inner yoke 28, and the coil 34. A movable part of the linear actuator 12b is configured by the magnet holder 30 and the permanent magnet 32. Since the magnet holder 30 is fixed to the piston 12a and the permanent magnet 32 is held by the magnet holder 30, the piston 12a is integrally movable with the magnet holder 30 and the permanent magnet 32.

There is a gap in the radial direction between the components of the linear actuator 12b such that the movable part is movable in the axial direction with respect to the stationary part. A first radial gap 36a is formed between the piston 12a and the inner yoke 28, a second radial gap 36b is formed between the inner yoke 28 and the magnet holder 30, and a third radial gap 36c is formed between the magnet holder 30 and the outer yoke 26. It can be also said that the third radial gap 36c is formed between the permanent magnet 32 and the coil 34. The first radial gap 36a, the second radial gap 36b, and the third radial gap 36c may have the same size.

The outer yoke 26 is fixed to the housing 12c. The inner yoke 28 is disposed on a radially inner side of the outer yoke 26 and is fixed to the housing 12c. The inner yoke 28 is connected to the outer yoke 26 by a yoke connection member (not illustrated) . The yoke connection member may be disposed below the magnet holder 30 in the axial direction and connect the outer yoke 26 and the inner yoke 28 to each other. The outer yoke 26 and the inner yoke 28 are formed of, for example, an iron-basedmagneticmaterial or other materials suitable for a yoke.

The outer yoke 26 has, for example, an annular shape or a cylindrical shape. An outer peripheral surface of the outer yoke 26 is attached to the housing 12c. A coil receiving groove is formed over the entire perimeter of an inner peripheral surface of the outer yoke 26, and the coil 34 is housed and fixed in the coil receiving groove. An inner peripheral surface of the coil 34 and the inner peripheral surface of the outer yoke 26 form the same cylindrical surface about the center axis 13 of the piston 12a. The inner yoke 28 is disposed such that an outer peripheral surface of the inner yoke 28 faces the inner peripheral surface of the outer yoke 26. However, as described above, the magnet holder 30 and the permanent magnet 32 are inserted between the outer peripheral surface of the inner yoke 28 and the inner peripheral surface of the outer yoke 26 (and the coil 34).

Providing the coil 34 in the outer yoke 26 is advantageous in terms of heat dissipation of the coil 34 and an increase in the number of turns compared to a case where the coil 34 is provided in the inner yoke 28. However, in a case where a required performance is satisfied, the coil 34 may be fixed to the inner yoke 28.

The magnet holder 30 includes a magnet receiving recessed part 30a positioned between the inner yoke 28 and the outer yoke 26 in the radial direction. The magnet receiving recessed part 30a is formed in the magnet holder 30 over the entire perimeter, and is opened toward the coil 34. The magnet holder 30 is formed of, for example, stainless steel or other nonmagnetic materials, and has, for example, an annular shape or a cylindrical shape.

In addition, the magnet holder 30 includes a holder upper end 30b, a holder lower end 30c, a holder wall part 30d, and a piston connecting part 30e. The magnet receiving recessed part 30a is defined by the holder upper end 30b, the holder lower end 30c, and the holder wall part 30d. The holder upper end 30b, the holder lower end 30c, and the holder wall part 30d are disposed between the inner yoke 28 and the outer yoke 26, the holder wall part 30d corresponds to a so-called bottom part of the magnet receiving recessed part 30a, and the holder upper end 30b and the holder lower end 30c correspond to side walls of the magnet receiving recessed part 30a. The holder wall part 30d connects the holder upper end 30b and the holder lower end 30c to each other in the axial direction. The magnet holder 30 is connected to the piston 12a by the piston connecting part 30e.

The permanent magnet 32 is housed in the magnet receiving recessed part 30a, and is fixed to the magnet holder 30 without using an adhesive. A dimension of the permanent magnet 32 is defined, for example, such that the permanent magnet is fitted or engaged with the magnet receiving recessed part 30a. Accordingly, the permanent magnet is fixed to the magnet holder 30 without using an adhesive. The holder upper end 30b is in contact with an upper part of the permanent magnet 32, the holder lower end 30c is in contact with a lower part of the permanent magnet 32, and the holder wall part 30d is in contact with an inner peripheral surface of the permanent magnet 32. As described above, since the magnet receiving recessed part 30a is opened toward the coil 34, the permanent magnet 32 is held by the magnet holder 30 such that an outer peripheral surface of the permanent magnet 32 faces the inner peripheral surface of the coil 34. The outer peripheral surface of the permanent magnet 32 is not covered with the magnet holder 30.

Just as the magnet holder 30, the permanent magnet 32 has an annular shape or a cylindrical shape. However, the permanent magnet 32 may be formed by arraying a plurality of divided magnet members, each of which has an arc shape, in an annular shape or a cylindrical shape. The permanent magnet 32 may have one magnetic pole (N-pole or S-pole) on the inner peripheral surface and may have the other magnetic pole (S-pole or N-pole) on the outer peripheral surface.

In such a configuration, when a current is supplied to the coil 34, a magnetic field is generated around the coil 34, and the linear actuator 12b is driven by a magnetic interaction between the magnetic field and the permanent magnet 32. That is, the linear actuator 12b oscillates the piston 12a in the axial direction. Accordingly, the piston 12a generates pressure oscillation of the refrigerant gas in the compression chamber 12e. The pressure oscillation of the refrigerant gas in the compression chamber 12e is transmitted to the expander 16 via the connecting pipe 14. As described above, the refrigeration cycle is configured between the linear compressor 12 and the expander 16, and the cryocooler 10 can cool the cooling stage 20 to a desired cryogenic temperature.

An adhesive is not used in the linear actuator 12b. The permanent magnet 32 is housed in the magnet receiving recessed part 30a, and is fixed to the magnet holder 30 without using an adhesive. Since an adhesive is not used, an outgas derived from the adhesive is not generated in the linear actuator 12b. Therefore, inconvenience attributable to such an outgas does not occur.

For example, even when the cryocooler 10 is operated for a long period of time without maintenance, the outgas is not mixed with the refrigerant gas in the linear compressor 12 and does not contaminate the inside of the expander 16. Thus, a decrease in a cooling capacity attributable to the outgas does not occur.

In a case where an adhesive is used, the adhesive can be peeled off when an impact is applied to the magnet holder or the movable part of the linear actuator for some reason such as an overstroke . When the fixing of the permanent magnet becomes insufficient due to the peeling, the permanent magnet can fall off, and thereby the linear actuator 12b can break down. However, in the embodiment, since the permanent magnet 32 is fixed to the magnet holder 30 without using an adhesive, the permanent magnet 32 does not fall off due to the peeling of an adhesive.

In addition, when the permanent magnet is bonded, it is difficult to remove the permanent magnet. However, in the embodiment, since the permanent magnet 32 is fixed without an adhesive, the linear actuator 12b may be designed such that the permanent magnet 32 can be removed from the magnet holder 30. It becomes easier to replace the permanent magnet 32 as necessary (for example, for some reason such as demagnetization).

In a case where an adhesive is used, there can be a measure to provide an adsorbent for an outgas. However, in a case where there is a physical restriction that various onboard devices must be disposed in a very limited space such as a spacecraft, it is not easy to secure a place for providing the adsorbent in terms of design. It is not always possible to provide a large amount of adsorbent sufficient to adsorb all the outgas that can be generated. In addition, the adsorbent is likely to deteriorate in space due to an effect of radiation, and there is also a possibility that the adsorbent becomes unusable early. However, such a problem does not occur since an adhesive is not used in the embodiment.

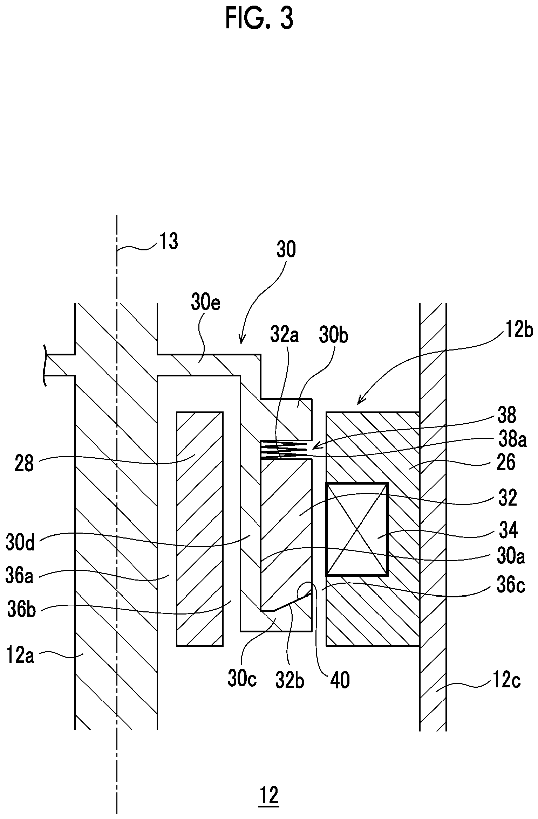

The magnet fixing structure according to the embodiment is not limited to the example described above, and can take various structures. Some examples will be described below with reference to Figs. 3 to 6. Figs. 3 to 6 schematically illustrate another example of the magnet fixing structure in the linear compressor 12 of the cryocooler 10 according to the embodiment.

In Figs. 3 to 6, as in the example described above, the linear actuator 12b is a magnet movable linear oscillation actuator and includes the outer yoke 26, the inner yoke 28, the magnet holder 30, the permanent magnet 32, and the coil 34. The first radial gap 36a is formed between the piston 12a and the inner yoke 28, the second radial gap 36b is formed between the inner yoke 28 and the magnet holder 30, and the third radial gap 36c is formed between the magnet holder 30 and the outer yoke 26.

The magnet holder 30 includes the magnet receiving recessed part 30a positioned between the inner yoke 28 and the outer yoke 26 in the radial direction, and is fixed to the piston 12a. The magnet holder 30 includes the holder upper end 30b, the holder lower end 30c, the holder wall part 30d, and the piston connecting part 30e.

The permanent magnet 32 is housed in the magnet receiving recessed part 30a, and is fixed to the magnet holder 30 without using an adhesive. The permanent magnet 32 is held by the magnet holder 30 by a frictional force that acts between a surface of the permanent magnet 32 and a surface of the magnet holder 30. In some examples, at least one of the holder upper end 30b and the holder lower end 30c of the magnet holder 30 engages with the permanent magnet 32 such that the permanent magnet 32 is held in the magnet receiving recessed part 30a.

In a first embodiment illustrated in Fig. 3, the magnet holder 30 includes a pressing mechanism 38 that presses the permanent magnet 32 against the magnet receiving recessed part 30a. The pressing mechanism 38 includes a spring member 38a attached to the holder upper end 30b. The spring member 38a acts on an upper end surface 32a of the permanent magnet 32 and presses the permanent magnet 32 against the holder lower end 30c in the axial direction. The spring member 38a is accommodated in the magnet receiving recessed part 30a together with the permanent magnet 32. The spring member 38a may be, for example, a coiled wave spring (CWS) . The upper end surface 32a of the permanent magnet 32 is a flat surface perpendicular to the center axis 13.

The holder lower end 30c includes an inclined surface 40 inclined toward the inside of the magnet receiving recessed part 30a, and is inclined such that a lower end surface 32b of the permanent magnet 32 engages with the inclined surface 40. The inclined surface 40 is inclined such that a normal of the inclined surface 40 intersects the center axis 13. The inclined surface 40 is inclined at the same angle as the lower end surface 32b of the permanent magnet 32 and is in contact with the lower end surface 32b of the permanent magnet 32. When the pressing mechanism 38 presses the permanent magnet 32 against the holder lower end 30c in the axial direction, the permanent magnet 32 is pressed radially inward by the inclined surface 40 also against the holder wall part 30d.

In such a manner, the permanent magnet 32 is housed in the magnet receiving recessed part 30a, and is mechanically fixed to the magnet holder 30 without using an adhesive. The magnet holder 30 can fix the permanent magnet 32 not only in the axial direction but also in the radial direction.

The disposition of the pressing mechanism 38 and the disposition of the inclined surface 40 may be reverse to each other. That is, the spring member 38a may be attached to the holder lower end 30c, and the holder upper end 30b may include the inclined surface 40.

In addition, it is not essential to provide the magnet holder 30 with the inclined surface 40, and both of the holder lower end 30c and the lower end surface 32b of the permanent magnet 32 may include a flat surface perpendicular to the center axis 13 and may come into contact with each other. When a pressing force generated by the pressing mechanism 38 is sufficiently large, the permanent magnet 32 can be fixed to the magnet holder 30 without an adhesive.

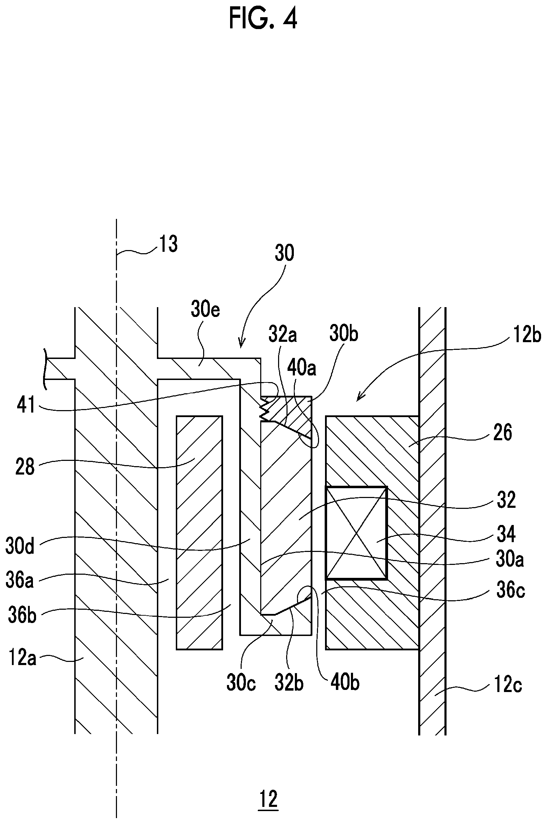

In a second embodiment illustrated in Fig. 4, both of the holder upper end 30b and the holder lower end 30c of the magnet holder 30 engage with the permanent magnet 32 such that the permanent magnet 32 is held in the magnet receiving recessed part 30a. The holder upper end 30b includes an inclined surface 40a inclined toward the inside of the magnet receiving recessed part 30a, and is inclined such that the upper end surface 32a of the permanent magnet 32 engages with the inclined surface 40a. The holder lower end 30c includes an inclined surface 40b inclined toward the inside of the magnet receiving recessed part 30a, and is inclined such that the lower end surface 32b of the permanent magnet 32 engages with the inclined surface 40b. Each of the inclined surfaces 40a and 40b is inclined such that each normal intersects the center axis 13. The inclined surface 40a is inclined at the same angle as the upper end surface 32a of the permanent magnet 32, and is in contact with the upper end surface 32a of the permanent magnet 32. The inclined surface 40b is inclined at the same angle as the lower end surface 32b of the permanent magnet 32, and is in contact with the lower end surface 32b of the permanent magnet 32.

The holder upper end 30b is removably fixed to the magnet holder 30. This is convenient in work of attaching the permanent magnet 32 to the magnet holder 30 or removing the permanent magnet 32 from the magnet holder 30.

For example, a screw portion 41 is formed on an inner peripheral surface of the holder upper end 30b, and the magnet holder 30 includes a corresponding screw portion. By tightening the screw portion 41, the holder upper end 30b is fixed to the magnet holder 30. Along with this, the holder upper end 30b presses the permanent magnet 32 against the holder lower end 30c in the axial direction. The permanent magnet 32 is pressed radially inward also against the holder wall part 30d by the inclined surfaces 40a and 40b. It can be said that the magnet holder 30 includes a pressing mechanism using a screw. Conversely, by loosening the screw portion 41, the holder upper end 30b is removed from the magnet holder 30.

Also in such a manner, the permanent magnet 32 is housed in the magnet receiving recessed part 30a, and is mechanically fixed to the magnet holder 30 without using an adhesive. The magnet holder 30 can fix the permanent magnet 32 not only in the axial direction but also in the radial direction.

The holder upper end 30b may be removably fixed to the magnet holder 30 by other appropriate fixing means such as fastening with a fastening member including a bolt. Similarly to the holder upper end 30b, the holder lower end 30c may be removably fixed to the magnet holder 30.

In addition, the inclined surfaces 40a and 40b may not be provided on both of the holder upper end 30b and the holder lower end 30c. An inclined surface may be provided on one of the holder upper end 30b and the holder lower end 30c, and a flat surface perpendicular to the center axis 13 may be provided on the other.

The third radial gap 36c may be narrower than the second radial gap 36b. Since the permanent magnet 32 is likely to be attracted to the outer yoke 26 by a magnetic force in the radial direction, the permanent magnet 32 is more reliably fixed to the magnet holder 30.

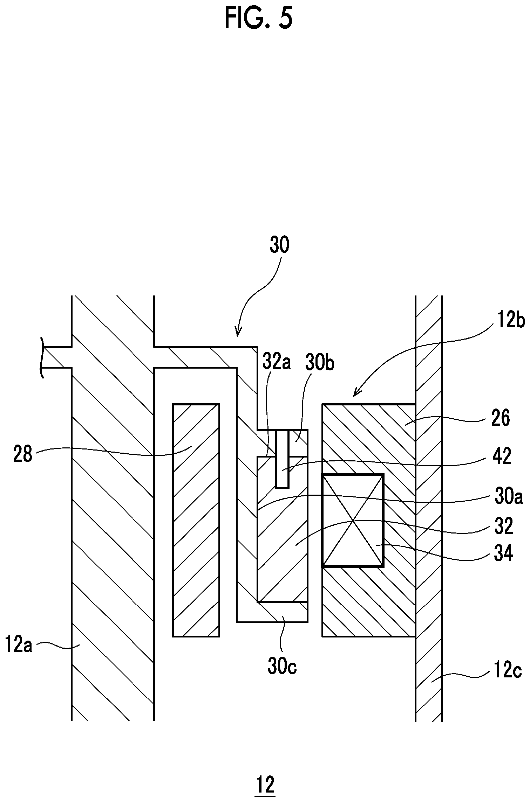

In the example illustrated in Fig. 5, the permanent magnet 32 is fixed to the magnet holder 30 by a fixing pin 42. The permanent magnet 32 may be fixed to the magnet holder 30, for example, by forming a pin hole penetrating from the holder upper end 30b to the upper end surface 32a of the permanent magnet 32 and pressing the fixing pin 42 into the pin hole. Also in such a manner, the permanent magnet 32 is housed in the magnet receiving recessed part 30a, and is mechanically fixed to the magnet holder 30 without using an adhesive.

Similarly, the permanent magnet 32 maybe fixed to the holder lower end 30c of the magnet holder 30 by the fixing pin 42.

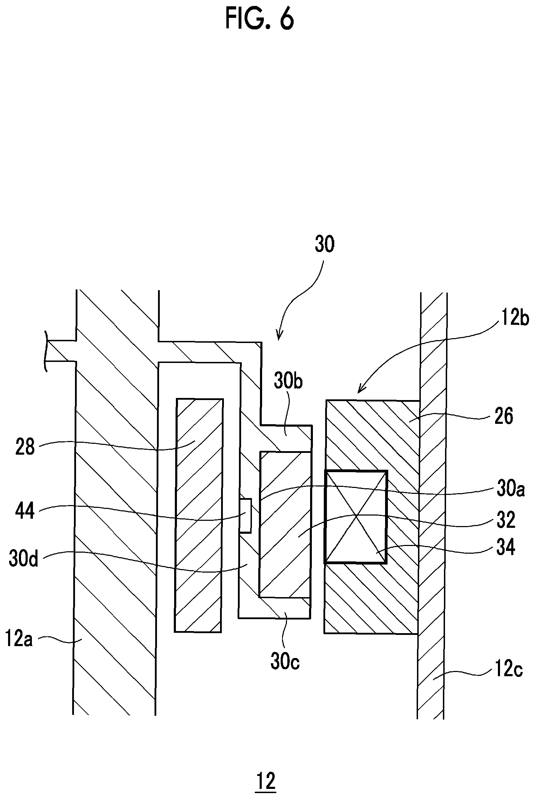

In the example illustrated in Fig. 6, the magnet holder 30 includes a magnetic body 44, and the magnetic body 44 is mounted on the magnet holder 30 such that the magnet holder 30 is sandwiched between the permanent magnet 32 and the magnetic body 44. The permanent magnet 32 is fixed to the magnet holder 30 by a magnetic force that acts between the permanent magnet 32 and the magnetic body 44. The magnetic body 44 is formed of, for example, an iron-based magnetic material, or other appropriate materials that are magnetically attracted to the permanent magnet 32. The magnetic body 44 is attached to, for example, the holder wall part 30d, and the holder wall part 30d is sandwiched between the permanent magnet 32 and the magnetic body 44. The magnetic body 44 may be housed in a recessed part formed in the holder wall part 30d, or may be buried in the magnet holder 30.

Also in such a manner, the permanent magnet 32 is housed in the magnet receiving recessed part 30a, and is magnetically fixed to the magnet holder 30 without using an adhesive.

The magnetic body 44 may be attached to the holder upper end 30b or the holder lower end 30c. For example, the first magnetic body 44 may be attached to the holder wall part 30d, and a second magnetic body may be attached to any one of the holder upper end 30b and the holder lower end 30c. In this manner, the magnet holder 30 can magnetically fix the permanent magnet 32 not only in the axial direction but also in the radial direction.

The present invention has been described hereinbefore based on the examples. It is understood by those skilled in the art that the present invention is not limited to the embodiment described above, various design changes are possible, various modification examples are possible, and such modification examples are also within the scope of the present invention. Various characteristics described in relation to one embodiment are also applicable to other embodiments. A new embodiment generated by combination has effects of the respective combined embodiments.

The magnet fixing structure according to the embodiment can be applied not only to a Stirling-type pulse tube cryocooler but also to other pulse tube cryocoolers such as a GM type pulse tube cryocooler or to other cryocoolers such as a Sterling cryocooler and a GM cryocooler.

Although the present invention has been described using specific phrases based on the embodiment, the embodiment merely shows one aspect of the principles and applications of the present invention, and many modification examples and changes in disposition are allowed without departing from the present invention defined in the claims.

### Brief Description of the Reference Symbols

- 10: cryocooler
- 12: linear compressor
- 12a: piston
- 12b: linear actuator
- 12c: housing
- 26: outer yoke
- 28: inner yoke
- 30: magnet holder
- 30a: magnet receiving recessed part
- 30b: holder upper end
- 30c: holder lower end
- 32: permanent magnet
- 32a: upper end surface
- 32b: lower end surface
- 38: pressing mechanism
- 40, 40a, 40b: inclined surface
- 42: fixing pin
- 44: magnetic body

## Claims

1. A linear compressor (12) for a cryocooler (10) comprising:
a piston (12a) that extends in an axial direction;
a linear actuator (12b) that drives the piston (12a) in the axial direction; and
a housing (12c) that accommodates the piston (12a) and the linear actuator (12b) and supports the piston (12a) to be oscillatable in the axial direction,
wherein the linear actuator (12b) includes
an outer yoke (26) that is fixed to the housing (12c),
an inner yoke (28) that is disposed on a radially inner side of the outer yoke (26) and is fixed to the housing (12c),
a magnet holder (30) that includes a magnet receiving recessed part (30a) positioned between the inner yoke (28) and the outer yoke (26) in a radial direction and is fixed to the piston (12a), and
a permanent magnet (32) that is housed in the magnet receiving recessed part (30a),
**characterized in that**
the permanent magnet (32) is fixed to the magnet holder (30) without using an adhesive, and
the magnet holder (30) includes a pressing mechanism that presses the permanent magnet (32) against a holder lower end (30c) of the magnet holder (30).

2. The linear compressor (12) for a cryocooler (10) according to claim 1,
wherein the magnet holder (30) includes a holder upper end (30b) and the holder lower end (30c), and at least one of the holder upper end (30b) and the holder lower end (30c) engages with the permanent magnet (32) such that the permanent magnet (32) is held in the magnet receiving recessed part (30a).

3. The linear compressor (12) for a cryocooler (10) according to claim 2,
wherein at least one of the holder upper end (30b) and the holder lower end (30c) includes an inclined surface (40, 40a, 40b) that is inclined toward an inside of the magnet receiving recessed part (30a), and
the permanent magnet (32) includes an upper end surface (32a) and a lower end surface (32b), and at least one of the upper end surface (32a) and the lower end surface (32b) is inclined so as to engage with the inclined surface (40, 40a, 40b).

4. The linear compressor (12) for a cryocooler (10) according to claim 2 or 3,
wherein at least one of the holder upper end (30b) and the holder lower end (30c) is removably fixed to the magnet holder (30) .

5. The linear compressor (12) for a cryocooler (10) according to any one of claims 1 to 4,
wherein the permanent magnet (32) is fixed to the magnet holder (30) by a fixing pin (42).

6. The linear compressor (12) for a cryocooler (10) according to any one of claims 1 to 4,
wherein the pressing mechanism includes a spring member (38a) attached to a holder upper end (30b) of the magnet holder (30) .

7. The linear compressor (12) for a cryocooler (10) according to any one of claims 1 to 4,
wherein the pressing mechanism is configured to press the permanent magnet (32) radially inward against a holder wall part (30d) of the magnet holder (30) by an inclined surface (40, 40a, 40b) of a holder upper end (30b) and the holder lower end (30c) .

## Patentansprüche

1. Linearverdichter (12) für einen Kryokühler (10), umfassend:
einen Kolben (12a), der sich in einer Axialrichtung erstreckt;
einen Linearaktuator (12b), der den Kolben (12a) in der Axialrichtung antreibt; und
ein Gehäuse (12c), das den Kolben (12a) und den Linearaktuator (12b) aufnimmt und den Kolben (12a) lagert, um in der Axialrichtung oszillierbar zu sein,
wobei der Linearaktuator (12b) umfasst
ein äußeres Joch (26), welches an dem Gehäuse (12c) befestigt ist,
ein inneres Joch (28), welches auf einer radialen Innenseite des äußeren Jochs (26) angeordnet ist und an dem Gehäuse (12c) befestigt ist,
einen Magnethalter (30), der ein Magnetaufnehmendes ausgespartes Teil (30a) umfasst, das in einer Radialrichtung zwischen dem inneren Joch (28) und dem äußeren Joch (26) positioniert ist und an dem Kolben (12a) befestigt ist, und
einen Permanentmagneten (32), der in dem Magnet-aufnehmenden ausgesparten Teil (30a) aufgenommen ist,
**dadurch gekennzeichnet, dass**
der Permanentmagnet (32) an dem Magnethalter (30) ohne Verwendung eines Haftvermittlers befestigt ist, und
der Magnethalter (30) einen Druckmechanismus umfasst, der den Permanentmagneten (32) gegen ein unteres Halterende (30c) des Magnethalters (30) drückt.

2. Linearverdichter (12) für einen Kryokühler (10) nach Anspruch 1,
wobei der Magnethalter (30) ein oberes Halterende (30b) und das untere Halterende (30c) umfasst, und das obere Halterende (30b) und/oder das untere Halterende (30c) derart mit dem Permanentmagneten (32) in Eingriff gelangt, dass der Permanentmagnet in dem Magnet-aufnehmenden ausgesparten Teil (30a) gehalten wird.

3. Linearverdichter (12) für einen Kryokühler (10) nach Anspruch 2,
wobei das obere Halterende (30b) und/oder das untere Halterende (30c) eine geneigte Fläche (40, 40a, 40b) umfasst, die zu einer Innenseite des Magnet-aufnehmenden ausgesparten Teils (30a) geneigt ist, und
der Permanentmagnet (32) eine obere Endfläche (32a) und eine untere Endfläche (32b) umfasst, und die obere Endfläche (32a) und/oder die untere Endfläche (32b) derart geneigt ist, dass sie mit der geneigten Fläche (40, 40a, 40b) in Eingriff gelangt.

4. Linearverdichter (12) für einen Kryokühler (10) nach Anspruch 2 oder 3,
wobei das obere Halterende (30b) und/oder das untere Halterende (30c) lösbar an dem Magnethalter (30) befestigt ist.

5. Linearverdichter (12) für einen Kryokühler (10) nach einem der Ansprüche 1 bis 4,
wobei der Permanentmagnet (32) durch einen Befestigungsstift (42) an dem Magnethalter (30) befestigt ist.

6. Linearverdichter (12) für einen Kryokühler (10) nach einem der Ansprüche 1 bis 4,
wobei der Druckmechanismus ein Federelement (38a) umfasst, welches an einem oberen Halterende (30b) des Magnethalters (30) befestigt ist.

7. Linearverdichter (12) für einen Kryokühler (10) nach einem der Ansprüche 1 bis 4,
wobei der Druckmechanismus konfiguriert ist, den Permanentmagneten (32) durch eine geneigte Fläche (40, 40a, 40b) eines oberen Halterendes (30b) und des unteren Halterendes (30c) radial nach innen gegen ein Halterwandteil (30d) des Magnethalters (30) zu drücken.

## Revendications

1. Un compresseur linéaire (12) pour un cryoréfrigérateur (10) comprenant :
un piston (12a) qui s'étend dans une direction axiale ;
un actionneur linéaire (12b) qui entraîne le piston (12a) dans la direction axiale ; et
un boîtier (12c) qui loge le piston (12a) et l'actionneur linéaire (12b) et supporte le piston (12a) pour qu'il puisse être oscillé dans la direction axiale,
dans lequel l'actionneur linéaire (12b) comprend :
une culasse externe (26) qui est fixée au boîtier (12c),
une culasse interne (28) qui est disposée sur un côté radialement interne de la culasse externe (26) et est fixée sur le boîtier (12c),
un support d'aimant (30) qui comprend une partie évidée de réception d'aimant (30a) positionnée entre la culasse interne (28) et la culasse externe (26) dans une direction radiale et est fixé sur le piston (12a), et
un aimant permanent (32) qui est logé dans la partie évidée de réception d'aimant (30a),
**caractérisé en ce que** :
l'aimant permanent (32) est fixé sur le support d'aimant (30) sans utiliser d'adhésif, et
le support d'aimant (30) comprend un mécanisme de pression qui comprime l'aimant permanent (32) contre une extrémité inférieure de support (30c) du support d'aimant (30).

2. Le compresseur linéaire (12) pour un cryoréfrigérateur (10) selon la revendication 1,
dans lequel le support d'aimant (30) comprend une extrémité supérieure de support (30b) et l'extrémité inférieure de support (30c), et au moins l'une parmi l'extrémité supérieure de support (30b) et l'extrémité inférieure de support (30c) se met en prise avec l'aimant permanent (32) de sorte que l'aimant permanent (32) est maintenu dans la partie évidée de réception d'aimant (30a).

3. Le compresseur linéaire (12) pour un cryoréfrigérateur (10) selon la revendication 2,
dans lequel au moins l'une parmi l'extrémité supérieure de support (30b) et l'extrémité inférieure de support (30c) comprend une surface inclinée (40, 40a, 40b) qui est inclinée vers un intérieur de la partie évidée de réception d'aimant (30a), et
l'aimant permanent (32) comprend une surface d'extrémité supérieure (32a) et une surface d'extrémité inférieure (32b), et au moins l'une parmi la surface d'extrémité supérieure (32a) et la surface d'extrémité inférieure (32b) est inclinée afin de se mettre en prise avec la surface inclinée (40, 40a, 40b).

4. Le compresseur linéaire (12) pour un cryoréfrigérateur (10) selon la revendication 2 ou 3,
dans lequel au moins l'une parmi l'extrémité supérieure de support (30b) et l'extrémité inférieure de support (30c) est fixée de manière amovible sur le support d'aimant (30).

5. Le compresseur Le compresseur linéaire (12) pour un cryoréfrigérateur (10) selon l'une quelconque des revendications 1 à 4,
dans lequel l'aimant permanent (32) est fixé sur le support d'aimant (30) par une broche de fixation (42).

6. Le compresseur linéaire (12) pour un cryoréfrigérateur (10) selon l'une quelconque des revendications 1 à 4,
dans lequel le mécanisme de pression comprend un élément de ressort (38a) fixé sur une extrémité supérieure de support (30b) du support d'aimant (30).

7. Le compresseur linéaire (12) pour un cryoréfrigérateur (10) selon l'une quelconque des revendications 1 à 4,
dans lequel le mécanisme de pression est configuré pour presser l'aimant permanent (32) radialement vers l'intérieur contre une partie de paroi de support (30d) du support d'aimant (30) par une surface inclinée (40, 40a, 40b) d'une extrémité supérieure de support (30b) et l'extrémité inférieure de support (30c).
